# EUROPEAN PATENT SPECIFICATION

(11) **EP 0 418 048 B1**
(45) Date of publication and mention of the grant of the patent: **14.08.1996**
(21) Application number: 90309968.7
(22) Date of filing: 12.09.1990
(51) Int. Cl.: H04N 5/232, G03B 17/48

(54) **Multi-way camera unit**
Mehrweg-Kameraeinheit
Caméra à plusieurs voies

(30) Priority: 13.09.1989 GB 8920725
(43) Date of publication of application: 20.03.1991
(73) Proprietor: Samuelson Film Service London Limited, Greenford, Middlesex UB6 8UQ (GB)
(72) Inventor: Kelly, Karl, Easr Shene, London SW 14 8BT (GB)
(74) Representative: Maggs, Michael Norman

(56) References cited:
- DE-C- 868 107
- FR-A- 2 509 941

## Description

The present invention relates to a multi-way camera unit, that is a unit via which an optical image, for example from a T.V. camera, can be passed between an input and a selected one of a plurality of outlets.

T.V. cameras are used in the film industry in a number of ways. The simplest way is for the T.V. camera operator simply to view the scene that he is filming via an eyepiece. This method is, however, not always suitable, particularly in situations such as crane shots where the camera may be too high for the operator to be able to see through the eyepiece. Alternatively, space may be very limited and there may not physically be enough room for the operator to position his eye close enough to the eyepiece. Here, it has become conventional for the image that would have otherwise been passed to the eyepiece, instead to be directed to a video camera, which either records what is being filmed for future reference, or alternatively displays the image on a screen where it can be seen at a distance. Occasionally, the camera operator may wish to be able to see the scene that is being filmed through the eyepiece and, at the same time, have the scene relayed to a remote screen where it can be seen by others. The director, for example, might wish to be able to see the scene as it is being shot, so that he can pass on his commands directly to the camera operator, without having to wait for the film to be processed before being able to comment upon it.

One known type of multi-way camera unit which enables a camera operator quickly to switch between seeing the image in the eyepiece and seeing it in the eyepiece and at the same time directing it towards a video camera, makes use of a pivoted partly silvered mirror. When the mirror is in a retracted position, the image from the T.V. camera simply passes straight along the length of a hollow cylindrical unit from an input at one end to an outlet at the other. When the user wishes to be able to pass the image onto a video camera, as well as seeing it in the eyepiece, he simply pivots the mirror to a 45° position within the cylindrical unit. In this position, approximately half of the light making up the image passes straight through the mirror to the eyepiece, as before, while the other half is reflected from the partial silvering at an angle of 45° and through an additional outlet in the side of the cylinder. At this outlet is positioned a video camera, so that the scene can be recorded as well as being viewed directly at the eyepiece.

A difficulty with this type of known unit is its lack of flexibility. If, for example, the film maker is using a camera with this type of unit attached to it, and he then wishes to undertake a large amount of shooting from a crane, the unit has to be removed from the camera and replaced with a unit suitable for sending the entire camera outlet to a video camera. Otherwise, the video camera will be recording only that light which has been reflected from the semi-silvered mirror; such an arrangement is not impossible to work with, but it is naturally desirable, where possible, that the image which is being recorded by the video camera is as bright as possible.

Another difficulty is that the exact position of the semi-silvered mirror, when it is extended outwardly into the 45° position, is not exactly reproducible. This means that there may well be a small offset between a given image recorded on the video camera, and the same image when recorded from exactly the same position somewhat later. Such an unpredictable offset is no longer acceptable to today's film makers, since there is nowadays a need for images to be reproducibly positioned sufficiently accurately that reproducible image overlays and mixes are possible. The film maker might wish, for example, to be able to overlay two separate images: one arriving from the live scene that is being shot (that is, effectively the image that is being passed to the camera viewfinder), and an earlier image of the same scene which has been recorded onto video tape. If the position of the image which is being recorded by the video camera is likely to change every time the mirror is swung in and out, this type of mixing becomes virtually impossible.

Another example of a multi-way camera is disclosed in FR-A-2 509 941.

It is an object of the present invention at least to alleviate the problems of the prior art.

It is a further object of the present invention to provide a multi-way camera unitin which the outlet images are co-incident and reproducible in position.

A multi-way camera unit in accordance with the present invention is set-out in claim 1.

According to a first embodiment of the present invention there is provided a multi-way camera unit having three-way switch means operable for selectively passing an image applied to an input thereof to: a first outlet only; or to a second outlet only; or to both the first and second outlets simultaneously.

A unit of this type may conveniently be embodied by the use of two movable mirrors, one fully and one partially silvered. In a first position of the switch means the image applied to the input passes directly to the first outlet, without reflection from either mirror; in the second position the image is reflected to the second outlet only from the fully silvered mirror; and in the third position the image is partially reflected by the semi-silvered mirror to the second outlet, and partially passes through the semi-silvered mirror to the first outlet. Conveniently, the first and second outlets, along with the inlet or input to the multi-way unit, may comprise apertures in a housing.

It is desirable for the sake of repeatability, for the images at the first and second outlets not to change in position as the unit is repeatedly switched. To this end, the fully and partially silvered mirrors may be slidable in a direction perpendicular to their own planes, selectively into and out of a position in which they will reflect an image applied at the unit inlet. If both of the mirrors further lie in the same plane, positional consistency can be obtained between the video image when it is reflected from the fully silvered mirror, and the video image when it is reflected from the partially silvered mirror.

The mirrors may be rigidly mounted on mounting blocks which are slidable on guide means extending generally perpendicular to the direction of the light entering the door inlet. The mirrors are best positioned as 45° to this direction, resulting in a change of angle of 90° for light reflected from them. One suitable form of guide means, which enables the mirrors to retain a very high positional accuracy in a direction perpendicular to their surfaces, which of course is the important consideration, is a pair of elongate guide rods received within corresponding guide bores of the mirror supports. Other guiding mechanisms could, of course, also be envisaged, such as pin and slot arrangements, or indeed any other mechanism which will allow longitudinal movement of the mirror support while at the same time having very little slack in the perpendicular direction, or in the direction normal to the mirror surface.

The mirrors may be mounted on respective first and second mirror blocks, each of which is capable of being moved to a position on the guide means in which light entering at the inlet will impinge upon the mirror. The guide means are of sufficient length that both of the blocks may be retracted from this position far enough that, in one of the three possible positions, light entering at the inlet simply passes straight through the unit door without impinging on either of the two mirrors. The mirrors may be positioned then on either side of this 'straight through' light path, but they could, alternatively, be positioned both on the same side of it.

Bias means, for example one or more coil springs, may be provided to bias the mirrors into their non-operative positions, that is the positions in which light entering the inlet does not impinge on them. In the embodiment in which the guide means comprise two or more guide rods on which the mirror blocks are mounted, the bias means may comprise coil springs surrounding the rods, and tending to push the two blocks apart.

User-operable control means may be provided for selectively moving either one mirror, or the other mirror, into the position in which it will reflect the light impinging upon it from the door inlet. These may consist, for example, of spigots arranged to be received within respective parallel grooves in the mirror blocks, the spigots being selectively movable in a direction perpendicular to the slots so as to push the blocks into and/or out of the central or operational position. The spigots may themselves be controlled by means of a rotary selection mechanism, including a rotary switch, and a rotatable body secured to the switch. Stops on the body, for example inwardly-directed spigots, then act to press against freely-rotating arms mounted to a spindle of the switch, so forcing one or more of the arms in a particular direction. The spigots which fit into the grooves in the blocks are mounted to or are part of these arms, so the force from the stops on the rotational body, transmitted through the rotational arm and thus through the spigot, acts to move the block along the guide means into the operational position. This is preferably against the biasing force.

Two such stops on the rotational body are preferably provided, then acting on one of the arms to move a first block into the operational position, and the other acting on the other arm to move the other block into the operational position. The arms may be, but are not necessarily, in the form of 'clock arms', which are mounted to the user-operable switch spindle. In a first position, in which the semi-silvered mirror is in the operational position, the arms are approximately at 90° to one another; in the second position in which neither mirror is in the operational position, the arms are at approximately 180° from each other; and in a third position in which the fully-silvered mirror is in the operational position, the arms are again at approximately 90° from one another.

Latch means, for example, a cooperating leaf spring and notch arrangement, may be provided for positively latching the rotational body in each of the three positions.

According to a second embodiment of the present invention there is provided a multi-way camera unit having an angled mirror mounted to a support, guide means for guiding the support in a direction parallel to the mirror surface and user-operable switch means for moving the support along the guide means from a first position in which an image applied to an input of the unit is reflected from the mirror to a first outlet, and a second position in which the image passes directly to a second outlet, missing the mirror.

The mirror could either be fully-silvered, in which case in the first position the image would be passed wholly to the first outlet; or a partly-silvered mirror in which case the image, in the first position, would be applied partly to the first outlet and partly to the second outlet.

It will be appreciated, of course, that reference in this specification to images being passed between inlets and outlets, could equally well be replaced with references to light beams being selectively so passed.

The invention may be carried into practice in a number of ways and one specific embodiment will now be described, by way of example, with reference to the drawings, in which:
Figure 1 is a perspective view of a multi-way camera unit, illustrating how it is positioned between a camera door, an eyepiece and a video camera;
Figure 2 is a partially cut away, perspective view of the camera unit of Figure 1; and
Figure 3 illustrates the mechanism for switching between the three possible outlets of the unit of Figures 1 and 2.

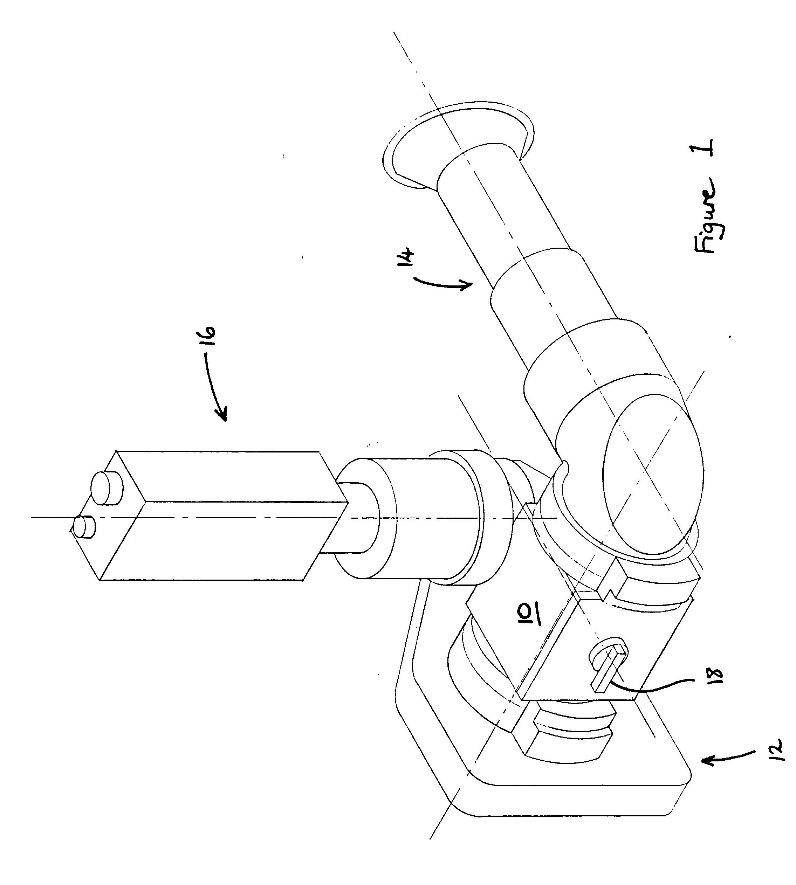

Figure 1 shows how a multi-way camera unit10 embodying the present invention may be positioned between a camera door 12, an eyepiece 14, and a video camera 16. The image that is being filmed by the T.V. camera (not shown) passes through the door 12 and into the unit 10. A three-position switch 18 enables the camera user to choose whether this image is directed either wholly to the eyepiece 14, or wholly to the video camera 16, or partly to the eyepiece and partly to the video camera.

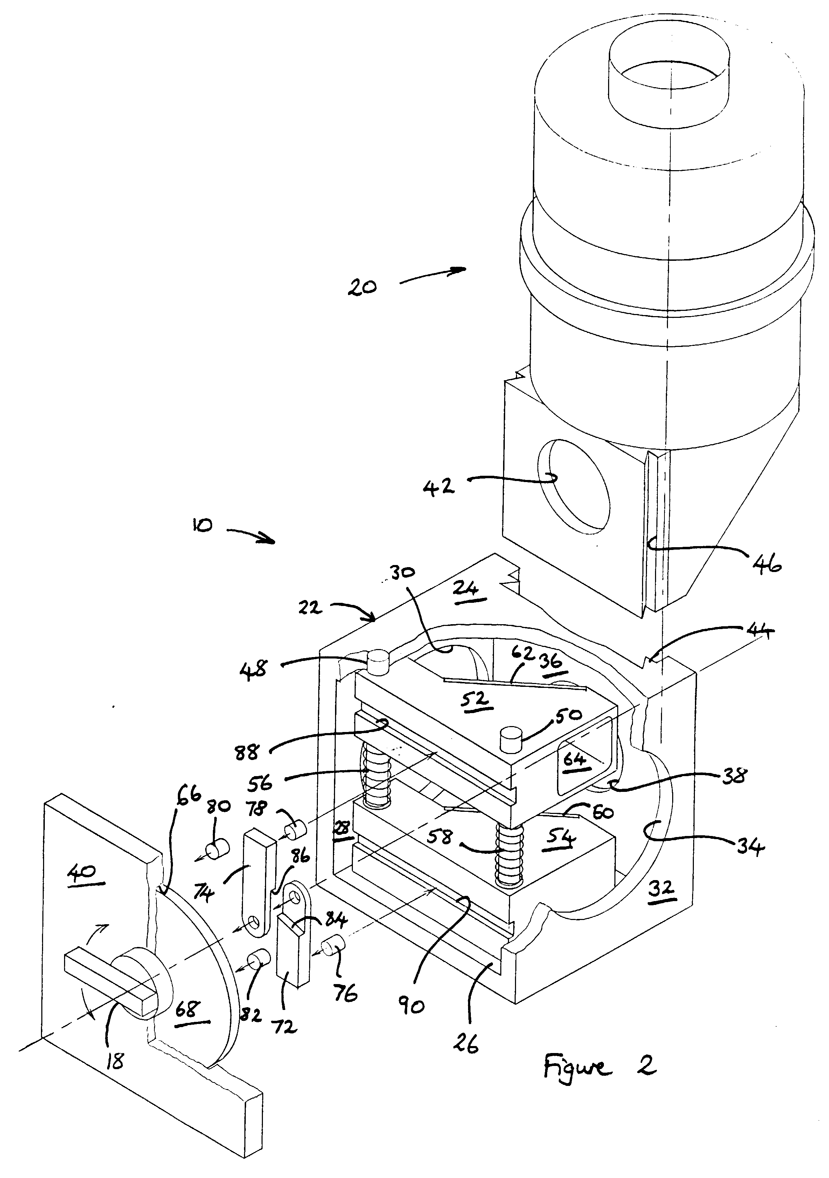

Turning now to Figure 2, there is shown an exploded view of the multi-way unit 10, and further details of a connector 20 by which the unit is attached to the video camera 16. The multi-way unit10 comprises a generally cuboid housing indicated by numeral 22 which consists of an upper wall 24, a lower wall 26, a rear wall 28 having an input aperture 30, a front wall 32 having a first outlet aperture 34, and a first side wall 36 having a second outlet aperture 38. The remaining side wall consists of a removable lid 40, via which access may be had to the interior of the multi-way door. The lid 40 is secured in position by retaining screws (not shown).

As will be appreciated from a comparison of Figures 1 and 2, the input aperture 30 receives the image from the T.V. camera, via an aperture in the door 12; the first outlet aperture 34 selectively passes this image to the eyepiece 14; and the second outlet aperture 38 selectively passes the image through a corresponding aperture 42 in the connector 20 and to an internal mirror (not shown) at 45°, from where it is sent on to the video camera 16. A similar 45° mirror (again not shown) is located within the eyepiece 14. By using an identical number of mirrors to take the image to the eyepiece 14 and to the video camera 16, it is ensured that the two respective images are the same way round.

The unit 10 secures to the camera door 12 by a conventional mechanism (not shown); similarly, a conventional mechanism is used to secure the eyepiece 14 to the unit The connector 20, however, secures to the door by a novel method comprising a slot 44 with fishtail edges in the side wall 36, into which slot is slid a correspondingly-shaped mounting portion 46 of the connector 20. In this way, the connector and the video camera can very quickly be mounted and demounted to and from the unit.

Extending between the upper and lower walls 24, 26 of the housing 22 there are a pair of fixed parallel slide rods 48, 50, mounted for sliding movement along these rods are a pair of generally wedge-shaped blocks 52, 54, the blocks being biased to respective positions at the upper and lower ends of the slide rods 48, 50 by means of intermediate springs 56, 58.

The lower block 54 is solid and has, on an angled surface extending parallel to its direction of movement, a 45° front-silvered mirror 60. The upper block 52 has a similar mirror 62, but this is only partially, rather than fully, silvered. Behind the mirror 62 there is an aperture 64; thus, light impinging on the mirror 62 will be partially reflected from its front surface, and will partially continue through the mirror and out of the aperture 64.

The operation of the multi-way unit will no doubt easily be understood. If the camera operator wishes the T.V. camera image to go just to the eyepiece 14, he positions the blocks 52, 54 as shown in Figure 2 so that light entering the housing through the input aperture 30 just passes straight between the blocks and out of the first outlet aperture 34. If, on the other hand, he wishes the image to go entirely to the video camera 16, he simply moves the lower block 54 upwardly so as to abut or almost abut the upper block 52, in which position light entering the aperture 30 is directed from the mirror 60 through the second outlet aperture 38. Finally, if he wishes to combine eyepiece and video camera operation, he moves the upper block 52 downwards, so as to abut or almost abut the lower block 54 in the position shown, and light entering via the aperture 30 then partially impinges upon the mirror 62 and leaves via the aperture 38 and also partially passes through the mirror 62 along the aperture 64 and out through the outlet aperture 34.

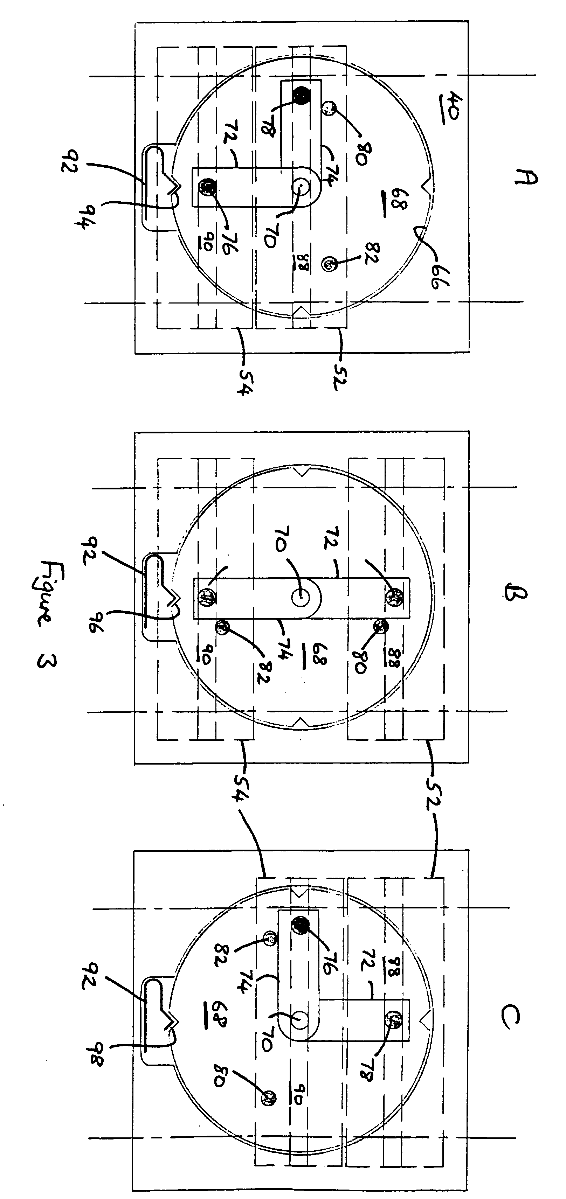

The mechanism by which these three possibilities may be chosen will now be described with reference to Figures 2 and 3. On the inner surface of the lid 40 there is a shallow circular recess 66 within which is mounted for rotational motion a control disc 68. The disc 68 is held in position by a central spindle 70 which is rigidly coupled to the rotational switch 18 on the outside of the lid. Thus, when the switch is turned, the control disc also turns. Mounted for free rotational movement on the inner end of the spindle 70 are first and second clock hand members 72, 74 each carrying an inwardly-directed spigot 76, 78 at its respective end. Rotational movement of the hand members 72, 74 about the spindle is restricted by a pair of stops 80, 82 which are positioned, as best seen in Figure 3, symmetrically slightly off a diameter of the control disc 68 in such a position that the greatest possible separation between the hand members 72, 74 is 180°. The least possible separation between the hand members is about 45°, this angle being defined by the angle of cooperating cutaways 84, 86 towards the inner ends of the hand members.

When the lid 40 is correctly positioned with respect to the rest of the housing 22, the spigots 78, 76 on the hands 74, 72 respectively lie within elongate slots 88, 90 which run along the side edges of the blocks 52, 54.

When the switch 18 is turned to the vertical position, as shown in Figure 2, the control disc takes up the position shown in Figure 3A. The stop 80, pressing on the side of the clock hand member 72, has pushed it down to a horizontal position. Consequently, the spigot 78, being retained within the slot 88, has pushed down the upper wedge 52, against the springs 56, 58, to a central position. In this position, as has previously been described, the image will be passed equally to the eyepiece 14 and to the video camera 16.

By rotating the knob 18 by a quarter turn anticlockwise, the control disc 68 moves to the position shown in Figure 3B. Now, the stop 80 no longer presses on the clock hand member 72, so the upper wedge 52 can move to the upper position under the action of the bias springs 56, 58. In this position, light passes directly between the wedges and therefore goes entirely to the eyepiece 14.

Finally, a third anticlockwise rotation of 90° of the switch 18 will bring the control disc 68 into the position shown in Figure 3C. Now, the other stop 82 has pressed against the clock hand member 74. Since the spigot 76 must remain within the slot 90, the lower wedge 54 is pushed upwards against the springs 56, 58 until it takes up an approximately central position. In this position, light entering the unit will be passed solely to the video camera 16.

As will no doubt be evident from the symmetry, continued rotation of the switch 18 anticlockwise will cause cycling back to position B, and then to position A. Alternatively, if desired, some additional stop means (not shown) may be provided to prevent continued rotation of the switch as described.

A leaf spring 92, respectively being retained in notches 94, 96 and 98 in the three positions A, B and C ensures positive latching in those positions.

Instead of using a 45° mirror (not shown) in the connector 20 to the video camera 16, it would also be possible to reverse the image electronically.

## Claims

1. A multi-way camera unit having three-way switch means including a reflecting mirror (60) and a partially reflecting mirror (62), each slidable in a direction parallel to their respective planes, selectively into and out of a position in which they will reflect an image applied at an inlet of the unit, such that in a first position of the switch means an image applied to the inlet passes directly to a first outlet of the unit, without reflection from either mirror; in a second position the image is reflected to a second outlet of the unit from the reflecting mirror; and in a third position the image is reflected by the partially-reflecting mirror to the second outlet, and also passes through the partially-reflecting mirror to the first outlet, characterised in that the mirrors are mounted on respective first and second mounting blocks, each of which is movable between an operative position in which light entering at the inlet will impinge on the respective mirror, and a respective inoperative position retracted from the inlet.

2. A unit as claimed in Claim 1 in which the reflecting surfaces of the mirrors lie in the same plane.

3. A unit as claimed in Claim 1 or Claim 2 in which the mounting blocks are slidable on guide means extending substantially perpendicular to the direction of light entering the inlet.

4. A unit as claimed in Claim 3 in which the guide means comprises an elongate guide rod received in their corresponding guide bores of the mounting blocks.

5. A unit as claimed in any one of the preceding Claims in which the first and second mounting blocks are each biassed to their respective inoperative positions.

## Patentansprüche

1. Mehrweg-Kameraeinheit mit einer Dreiwegschaltereinrichtung einschließlich eines Reflexionsspiegels (60) und eines teilweise reflektierenden Spiegels (62), die jeweils in eine Richtung parallel zu ihren jeweiligen Ebenen gleiten können, wahlweise in und aus einer Position, in welcher sie ein Bild reflektieren, das an einem Einlaß der Einheit angeordnet ist, so daß ein Bild, welches an dem Einlaß angeordnet ist, bei einer ersten Position der Schaltereinrichtung direkt zu einem ersten Auslaß der Einheit gelangt, ohne Reflexion von einem der Spiegel; in einer zweiten Position wird das Bild von dem Reflexionsspiegel zu einem zweiten Auslaß der Einheit reflektiert; und in einer dritten Position wird das Bild durch den teilreflektierenden Spiegel zu einem zweiten Auslaß reflektiert und gelangt gleichzeitig durch den teilreflektierenden Spiegel zu dem ersten Auslaß, **dadurch gekennzeichnet**, daß die Spiegel auf einem jeweiligen ersten und zweiten Montageblock montiert sind, von denen ein jeder zwischen einer Betriebsposition, in der Licht, welches durch den Einlaß eintritt, auf den jeweiligen Spiegel auftreffen wird, und einer jeweiligen von dem Einlaß zurückgezogenen Nichtbetriebsposition beweglich ist.

2. Einheit nach Anspruch 1, bei der die reflektierenden Flächen der Spiegel in derselben Ebene liegen.

3. Einheit nach Anspruch 1 oder 2, bei der die Montageblöcke auf Führungseinrichtungen gleiten können, die sich im wesentlichen rechtwinkelig zu der Richtung erstrecken, in der Licht durch den Einlaß eintritt.

4. Einheit nach Anspruch 3, bei der die Führungseinrichtung einen länglichen Führungsstab umfaßt, der in den korrespondierenden Führungsbohrungen der Montageblöcke aufgenommen ist.

5. Einheit nach einem der vorhergehenden Ansprüche, bei der die ersten und zweiten Montageblöcke jeweils in ihrer jeweiligen Nichtbetriebsposition vorgespannt sind.

## Revendications

1. Unité de caméra à voies multiples comportant des moyens de commutation à trois voies comprenant un miroir réfléchissant (60) et un miroir partiellement réfléchissant (62), chacun d'eux étant apte à glisser dans une direction parallèle à leurs plans respectifs et ce de façon sélective en direction et à partir d'une position dans laquelle ils réfléchissent une image appliquée à une entrée de l'unité, de sorte que, lorsque les moyens de commutation sont dans la première position, une image appliquée à l'entrée est transmise directement à une première sortie de l'unité, sans réflexion par l'un ou l'autre des miroirs; dans une seconde position, l'image est réfléchie vers une seconde sortie de l'unité par le miroir réfléchissant; et dans une troisième position, l'image est réfléchie par le miroir partiellement réfléchissant en direction de la seconde sortie, et traverse également le miroir partiellement réfléchissant en direction de la première sortie, caractérisée en ce que les miroirs sont montés sur des premier et second blocs de montage respectifs, dont chacun est déplaçable entre une position active, dans laquelle une lumière pénétrant à l'entrée rencontre le miroir respectif, et une position inactive respective en retrait par rapport à l'entrée.

2. Unité selon la revendication 1, dans laquelle les surfaces réfléchissantes des miroirs sont situées dans le même plan.

3. Unité selon la revendication 1 ou 2, dans laquelle les blocs de montage peuvent glisser sur des moyens de guidage qui s'étendent essentiellement perpendiculairement à la direction de la lumière pénétrant à l'entrée.

4. Unité selon la revendication 3, dans laquelle les moyens de guidage comprennent une tige formant guide allongé, logée dans ses perçages de guidage correspondants situés dans les blocs de montage.

5. Unité selon l'une quelconque des revendications précédentes, dans laquelle les premier et second blocs de montage sont sollicités chacun dans leur position inactive respective.
